# EUROPEAN PATENT APPLICATION

(11) **EP 2 669 836 A1**
(43) Date of publication of application: **04.12.2013**
(21) Application number: 12305606.1
(22) Date of filing: 31.05.2012
(51) Int. Cl.: G06F 21/30

(54) **Method, device and system for decrypting data**

(71) Applicant: Gemalto SA, 92190 Meudon (FR)
(72) Inventor: Shen, Mao Tian, 13705 LA CIOTAT (FR); Sy, Jenny, 13705 LA CIOTAT CEDEX (FR)

(57) **Abstract**

The invention relates to a method 20 for decrypting data.

According to the invention, a first device 12 is coupled to at least one second device 14. The second device comprises at least one display screen 1410. The second device stores at least one first key. The method comprises the following steps. The first device sends to the second device at least one request 24 for decrypting data accompanied with encrypted data. The second device decrypts, thanks to the first key, the encrypted data and obtains clear data. And the second device displays, through at least one display screen 1410, the obtained clear data.

The invention also pertains to corresponding second device and system.

## Description

### Field of the invention:

The invention relates generally to a method for decrypting data.

Furthermore, the invention also pertains to a device for decrypting data.

Finally, the invention also relates to a system for decrypting data.

The present invention is notably but not exclusively applicable to a mobile telecommunication field.

### State of the art:

A known solution for decrypting an encrypted text of a Short Message Service (or SMS) message, as data, is based upon a use of a mobile (tele)phone that is coupled to a Subscriber Identity Module (or SIM) card. Firstly, a phone user enters a Personal Identity Number (or PIN) associated with a mobile user account and verified by the SIM card, so as to access the mobile user account. The phone user is thus authenticated by the SIM card. Then, each time the phone receives an SMS message including an encrypted text, the phone forwards to the SIM card the encrypted text. Once the SIM card has decrypted the encrypted text by using a key stored within the SIM card, the SIM card sends to the phone clear data (i.e. as result of the decryption of the encrypted text). The phone displays the clear data through its display screen.

However, there is a need to access from encrypted data clear data in an alternative manner with respect to the known solution.

### Summary of the invention:

The invention proposes a solution for satisfying the just herein above specified need by providing a method for decrypting data.

According to the invention, a first device is coupled to at least one second device. The second device comprises at least one display screen. The second device stores at least one first key. The method comprises the following steps. The first device sends to the second device at least one request for decrypting data accompanied with encrypted data. The second device decrypts, thanks to the first key, the encrypted data and obtains clear data. And the second device displays, through at least one display screen, the obtained clear data.

The principle of the invention consists in transmitting from a first device to a second device encrypted data, decrypting the encrypted data and displaying resulting clear data at the second device by using a display screen integrated within the second device.

Contrary to the herein above described known solution, there is no transmission of resulting clear data from the second device to the first device. Such a non-transmission of resulting clear data reduces a risk of its use by a malicious application that intercepts the resulting clear data exchanged between the second device and the first device.

Thus, the invention allows issuing clear data in a more secure manner than with the known solution.

Preferably, the second device decrypts the encrypted data only if the second device authenticates an authorized user.

Only an authorized user who submits reference data stored within and verified by the second device is thus able to access clear data. The invention allows securing access to clear data.

According to a further aspect, the invention is a second device for decrypting data.

According to the invention, the second device is likely to be coupled to at least one first device. The second device comprises at least one display screen. The second device comprises means for storing at least one first key. The second device is adapted to receive from the first device at least one request for decrypting data accompanied with encrypted data, to decrypt, thanks to the first key, the encrypted data and obtains clear data, and to display, through at least one display screen, the obtained clear data.

As second device, it may be a token that is equipped with one or several display screens.

Within the present description, the token is a smart object that is intended to communicate with the outside world.

According to still a further aspect, the invention is a system for decrypting data.

According to the invention, the system comprises a first device and at least one second device. The first device is coupled to at least one second device. The second device comprises at least one display screen. The second device comprises means for storing at least one first key. The first device is adapted to send to the second device at least one request for decrypting data accompanied with encrypted data. And the second device is adapted to decrypt, thanks to the first key, the encrypted data and obtains clear data, and display, through at least one display screen, the obtained clear data.

As first device, it may be a terminal, be it portable or not, like a Personal Computer (or PC) or a portable device, such as a mobile phone, a Personal Digital Assistant (or PDA), a palm-top computer, a laptop computer, a portable TeleVision (or TV), a netbook, a tablet computer, a game console, a portable PC or any other portable terminal.

### Brief description of the drawings:

Additional features and advantages of the invention will be more clearly understandable after reading a detailed description of one preferred embodiment of the invention, given as an indicative and non-limitative example, in conjunction with the following drawings:

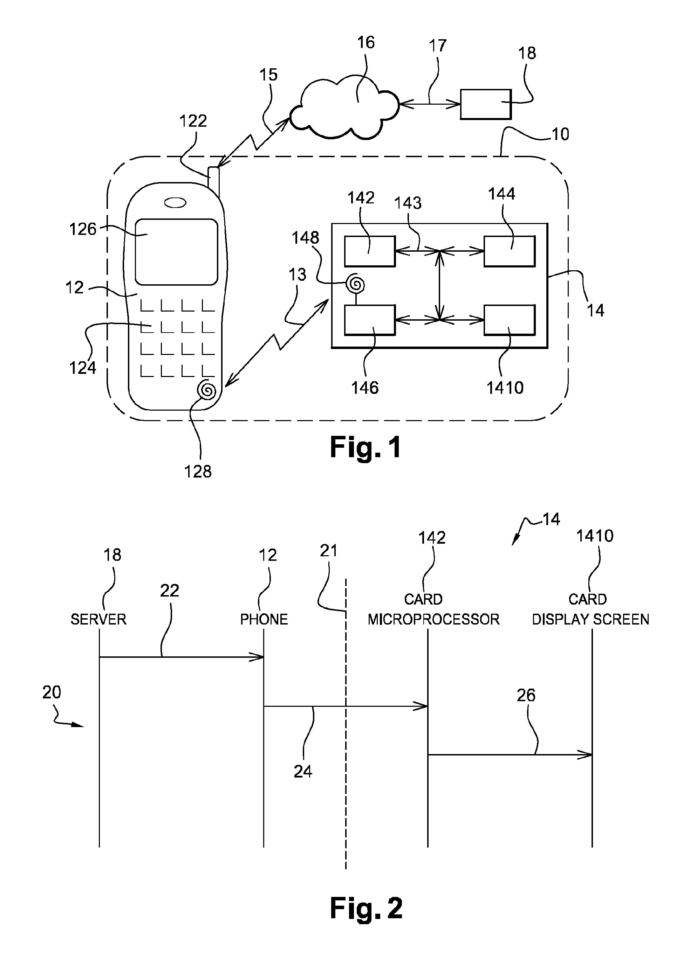

- Figure 1 illustrates a simplified diagram of one exemplary embodiment of a system including a mobile phone, as first device, and a token, as second device, the system being adapted to display, through a token display screen, clear data issued by the token further to a decryption of encrypted data received from or through the phone, according to the invention; and
- Figure 2 represents a simplified message flow of one exemplary embodiment of a method implemented notably by the phone and the token of figure 1, so that a token user sees, in a secure manner, clear data displayed by a token display screen.

### Detailed description:

Herein under is considered a case in which the invention method for decrypting data is implemented by a mobile phone, as portable device, in cooperation with at least one smart card, as token.

Figure 1 shows, among others, a system 10 for decrypting data.

The system 10 comprises a mobile phone 12, as portable device and user terminal, and a smart card 14, as token.

For the sake of clarity and conciseness, the mobile phone 12 and the smart card 14 are termed hereinafter the phone 12 and the card 14 respectively.

As to the terminal, it may be any device including means for processing data and comprising or being connected to means (not represented) for storing data.

The terminal may comprise or be connected to wireless communication means containing an antenna for sending to and/or receiving data from outside.

Within the present description, the adjective "wireless" used within the expression "wireless communication means" signifies notably that the communication means communicates via one or several long range radio-frequency links that may be more or less long.

The terminal may comprise or be connected to means for interfacing with a user, as Man Machine Interface (or MMI), like a keyboard, a loudspeaker (not represented) and/or a display screen.

The phone 12, as one embodiment of the first device, is connected, over a bi-directional wireless link(s) 15, to one or several mobile telecommunication networks 16.

Instead of the mobile radio-communication networks, it may be constituted by an Internet network accessible, via a contact-less link, like a Wifi or Bluetooth one, through an intermediate entity as an Internet access point.

The mobile radio-communication networks 16 may be constituted by a Global Service for Mobiles (or GSM), a General Packet Radio Servce (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

The long range radio-frequency(ies) of the wireless link(s) 15 may be fixed at several hundreds of MHz, for instance, around 850, 900, 1800 and/or 1900 MHz.

A remote server 18 is connected, over a bi-directional wire link 17, to the mobile telecommunication networks 16.

The server 18 is preferably able to exchange with the phone 12 one or several messages.

The messages may be constituted by one or several SMS type messages and/or one or several email type messages. At least one message include preferentially text that is previously encrypted either at the server 18 side or at the phone 12 side, so as to exchange data in a confidential manner.

The phone 12 is equipped preferably with a wireless antenna 122 for exchanging data, over the wireless link(s) 15, with outside, notably, via the mobile radio-communication networks 16, with the server 18.

The phone 12 includes preferably a contact-less antenna 128 (not represented) for exchanging data, over a short range radio-frequency link(s) 13, as contact-less link, with outside notably with the card 14.

The short range radio-frequency(ies) may be fixed at, for instance, 13,56 MHz relating to a Near Field Communication (or NFC) technology. Typically, the distance between the phone 12 and the card 14, as interlocutor of the phone 12, is up to 20 cm.

Instead of integrating a contact-less antenna, the phone 12 is connected to a contact-less antenna 128 carried by an add-on device that is fixed to the Printed Circuit Board (or PCB), a part, like a case, or an accessory, like a battery, of the phone 12.

The phone 12 comprises preferably a keyboard 124 allowing its user to enter or select data.

The phone 12 comprises preferably a display screen 126.

According to another embodiment of the user terminal (not represented), as first device, the terminal does not incorporate any display screen.

The phone 12 includes preferably at least one microprocessor (not represented), at least one memory (not represented) and at least one Input/Output (or I/O) interface.

The phone memory stores non-executable data and executable data, as at least one application.

As non-executable data, it may contain:
- an International Mobile Equipment Identity (or IMEI) or the like, as phone identifier;
- a Uniform Resource Identifier (or URI) or a Uniform Resource Locator (or URL) of a server 18, as phone interlocutor;
- a phone book comprising one or several phone numbers of other terminals (not represented), as phone interlocutors; and/or
- an Internet Protocol (or IP) address of a server 18, as phone interlocutor.

The phone memory stores at least one application.

As application(s) supported by the phone 12, there is preferably an application for cooperating with the card 14, so as to decrypt and/or encrypt data. Such an application allows exchanging with the card 14 encrypted data to be decrypted and displayed by the card 14 and/or data to be encrypted by the card 14 and sent back by the card 14.

The application for cooperating with the card 14 is arranged so that, when executed by the phone 12, the phone 12 requests the card 14 to decrypt encrypted data that the phone 12 attaches to such a request for decrypting data.

The encrypted data that the phone 12 sends to the card 14 is preferably comprised within at least one SMS type message and/or at least one email type message, as message(s) including text data.

To detect data that has to be decrypted, the phone 12 is able to identify particular data, like a specific header relating to a Software Data Crypto Engine (or SDCE), as predetermined data for indicating that data attached to the predetermined data includes encrypted data to be sent to the card 14 and decrypted by the card 14. The specific header may be added on top of an encrypted text included within a text message. The predetermined data is added by, for instance, another terminal, like a mobile phone, as third device and sender of the encrypted data to be sent to the card 14 and decrypted by the card 14.

The application for cooperating with the card 14 may be arranged so that, when executed by the phone 12, the phone 12 requests the card 14 to encrypt data that the phone 12 attaches to such a request for encrypting data.

The phone microprocessor processes data originating from the phone memory and/or an external entity(ies), like the card 14 and/or the server 18.

The phone microprocessor executes the application for cooperating with the card 14 so as to interact with the card 14.

The phone microprocessor may execute another application supported by the phone 12, so as to exchange data with the server 18.

The phone 12 is coupled to the card 14.

The phone I/O interface includes an interface, so as to exchange data with the card 14.

The phone I/O interface with the card 14 may be a contact interface, like, for instance, an International Organization for Standardization (or ISO) 7816 type interface, when the card 14 is inserted within or connected to the phone 12.

The phone I/O interface with the card 14 is preferentially constituted by a contact-less interface.

The phone 12 is connected, preferably through a bi-directional contact-less link(s) 13, to the card 14.

The card 14 belongs to a user, namely a service subscriber and/or an account number owner.

The card 14 is a token.

The token is any electronic medium that may have different form factors.

For instance, instead of a smart card, the token may be a smart dongle of the USB (acronym for "Universal Serial Bus") type, or a chip to be fixed to the phone 12, as user terminal and host device, possibly in a removable manner.

For instance, the card 14 may be a Subscriber Identity Module (or SIM) type smart card, a (micro) Secure Digital (or SD) type card, a micro-SD type card or a Multi-Media type Card (or MMC) or any card of another format.

The card 14 comprises a chip.

The card 14 chip includes preferably at least one microprocessor 142, as data processing means, at least one memory 144, and at least one I/O interface 146 which are internally linked together through a data and control bus 143.

The card 14 contains a display screen 1410.

The display screen 1410 may be of, for instance, a Liquid Crystal Display (or LCD) technology. The display screen 1410 may be of any other technology type.

According to another embodiment (not represented), the card 14, as token, includes several display screens.

The display screen 1410 is connected to the data and control bus 143.

The card 14 may incorporate at least one button, so as to enter or select data, like a password, such a Personal Identity Number (or PIN) or a One Time Password (or OTP), that the card memory 144 stores and has to check, as reference data to be matched.

The card I/O interface 146 comprises preferably a contact-less interface. Thus, the card 14 communicates, through the contact-less link(s) 13, with the phone 12.

Alternately, instead of the contact-less interface, the card I/O interface 146 contains a contact interface, like, for instance, an ISO 7816 interface.

The card 14 chip includes a contact-less antenna 148.

The contact-less antenna 148 is internally connected to the contact-less interface of the card I/O interface 146.

The communication between the card 14 and the phone 12 is used in particular for benefitting from the display screen 1410 of the card 14, so that data is displayed to a card user in a confidential manner.

The card memory 144 stores at least one key, as first key, for decrypting data and at least one decryption algorithm, as first algorithm, for decrypting data. The first algorithm may be a Data Encryption Standard (or DES) or Triple DES. The first algorithm uses, as input, data to be decrypted and provided through or by the phone 12 and, as parameter, the first key, so as to generate, as first result, clear data, i.e. to decrypt encrypted data received from the phone 12.

The first key may constitute a private key relating to the card 14. The card memory 144 also stores preferably a corresponding public key relating to the card 14. Such a public key relating to the card 14 is to be used, by another device, like, for instance, the server 18, for encrypting data to be sent to the phone 12, so as to protect data thus transmitted in an encrypted manner.

Alternatively, instead of a private key and asymmetric key, the first key constitutes a symmetric key shared with and stored by any device that needs to exchange data with the phone 12 in an encrypted manner.

The card memory 144 stores, as executable data, at least one application, as first application, for decrypting data to be received from the phone 12.

The card 14 is preferably arranged to store data to be received from the phone 12 in an encrypted form, i.e. as received from the phone 12. Once received, the card 14 stores the encrypted data and to access corresponding clear data, the card 14 has to decrypt the stored encrypted data.

The card 14 is adapted to decrypt, thanks to the first key, encrypted data that accompanies a request, received from the phone 12, for decrypting the encrypted data. Once the card 14 has decrypted encrypted data received from the phone 12 and obtains clear data, the card 14 is adapted to display, through the card display screen 1410, the (obtained) clear data.

The card memory 144 may store a key, as second key, for encrypting data and an encryption algorithm, as second algorithm, for encrypting data. The second algorithm may be a DES or Triple DES. The second algorithm uses, as input, data to be encrypted and provided through or by the phone 12 and, as parameter, the second key, so as to generate, as second result, encrypted data, i.e. to encrypt data received from the phone 12.

The second key constitutes preferably a public key relating to a third device, like the server 18, to which the encrypted data is to be addressed.

Alternately, the second key and the first key constitutes one and the same key shared between the card 14 and any other device with which the card 14 exchanged data in a protected and confidential manner.

The card memory 144 may store, as executable data, one application, as second application, for encrypting data to be received from the phone 12.

The card 14 is adapted to encrypt, thanks to the second key, data that accompanies a request, received from the phone 12, for encrypting data to be encrypted. The card 14 is preferably arranged to store data to be received from the phone 12 and encrypted by the card 14. Once received, the card 14 stores data to be encrypted and to access corresponding encrypted data, the card 14 has to encrypt the stored data (to be encrypted). Once the card 14 has encrypted data received from the phone 12 and obtains encrypted data, the card 14 is adapted to send to the phone 12 the (obtained) encrypted data.

The card microprocessor 142 controls the card display screen 1410, so as to display notably clear data that originates from encrypted data that has been provided through or by the phone 12 and decrypted by the card 14.

The card user has preferably subscribed to one or several services managed by the server 18.

As service(s), there is notably a service for being provided with encrypted data, so that the card 14 decrypts encrypted data to be provided by or through the phone 12 and/or a service for providing the phone 12 with data to be encrypted by the card 14.

The card microprocessor executes preferably one or several security functions, in order to protect access to information managed by the card 14.

The security functions include preferably a user authentication process. The user authentication process allows authenticating an authorized user.

The user authentication process may be used before decrypting encrypted data provided by or through the phone 12 and stored, as received, within the card memory 144. Thus, only an authorized user is able to let decrypt by the card 14 the encrypted data received from the phone 12 and to access corresponding clear data.

The user authentication process may be used before encrypting data provided by or through the phone 12 and stored, as received, within the card memory 144.

To authenticate the user, the card 14 stores preferably an application for verifying user authentication data stored securely within the card memory 144 and to be input by the card user. Thus, the card 14 compares user input with the stored user authentication data and authorize, when successful, a further prosecution, like a running of the first or second application supported by the card 14.

Preferably, the card 14 stores securely, within its memory 144, data for identifying the chip, such as an International Mobile Subscriber Identity (or IMSI) and/or an Integrated Circuit Card Identifier (or ICCID), as a unique number associated with all mobile radio-communication network(s) that may be used.

The IMSI is used for identifying a subscriber in relation to one or several mobile radio-communication networks 16.

The card memory 144 may store one or several SIM type applications like, for instance, a SIM for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The card memory 144 may store data relating to the concerned card user, as personal user data. The user data may include a first name, a last name, a birth date, a private key, a PIN, biometric data (like a fingerprint(s), a facial print(s) and/or a iris print(s)) and/or other appropriate.

The card memory 144 stores preferably a PIN(s), an OTP and/or biometric data, as user authentication data, to be matched with user input.

The card memory 144 may store a server identifier, like a URI or URL, so as to address the server 18.

The server 18 is identified within either data directly stored by the phone 12 or data stored within the card memory 144.

Alternately, the phone user may be requested to enter, through the phone 12 MMI, a server identifier to which data encrypted by the card 14 is to be sent.

The server 18 may play a role of a provider of data in an encrypted form or a receiver of data encrypted by the card 14.

The server 18 is hosted by a computer including data processing means.

The server 18 is dedicated to running an application for managing a database relating to at least one service and communicating some information included within the database to outside.

The database is also termed back-end database.

The server 18 accesses a memory (not represented) termed server memory that stores the database.

The server 18 may contain or be connected to the server memory.

The database registers a plurality of subscribers or user accounts. Each subscriber is associated with at least one identifier relating to a device, like a card identifier, and other corresponding device data.

For one subscriber or user account, several devices, like a phone and a card associated with the phone, with other related data may be registered within the database.

The server data processing means executes preferably security functions, in order to protect access to information managed through or by the server 18.

The security functions include an encryption/decryption process to be used before sending data to outside/after receiving data from outside, so as to protect access to data managed through or by the server 18.

To encrypt data to be sent to the phone 12, another mobile phone (not represented), as second terminal and sender of encrypted data, that is connected to the server 18 uses a third key that is stored within its memory and an encryption algorithm, like a DES or triple DES or the like.

The third key is preferably a public key relating to the card 14 associated with the phone 12.

Alternatively, the third key is constituted by a symmetric key shared with the card 14.

To decrypt data to be received from the phone 12, the second terminal uses a fourth key that is stored within its memory and a decryption algorithm, such as an AES, a DES or the like.

The fourth key is preferably a private key relating to the second terminal.

Alternatively, the fourth key is constituted by a symmetric key shared with the card 14.

The database associates preferentially, for each subscriber, a third key and/or a fourth key registered for the concerned user.

The server memory may store rules for accessing the service managed by the server 18.

The rules for accessing the service may encompass, for each user account, a user profile(s) that is(are) eligible for accessing the service and/or other kind of access condition(s).

The rules for accessing the service are taken into account so as to forbid or authorize access to the concerned service.

The server 18 may be operated by a mobile radio-communication network operator, a service provider, or on its behalf.

Figure 2 shows an example of a message flow 20 that involves the server 18, the phone 12 and the card 14, so as to exchange data in a secure manner.

In the explained example, the card user, as also the phone user, desires to access clear data.

A vertical dotted line 21 separates, at the left of the dotted line 21, the outside of the card 14 from, at the right of the dotted line 21, the internal components of the card 14.

It is assumed that the card 14 is close enough to the phone 12 so that the phone 12 is able to communicate with the card 14 and the card 14 is used for authenticating the card user.

It is assumed that a second terminal (not represented), as third device, encrypts data to be sent to the phone 12.

It is further assumed that the second terminal includes within a message to be sent, through the server 18, to the phone 12 encrypted data preceded by a header with predetermined data for indicating that data attached to the predetermined data includes the encrypted data.

Firstly, the server 18 sends to the phone 12 a message 22, such as one SMS type message, one Multimedia Message Service (or MMS) message and/or an email, including the header and the encrypted data.

Once the phone 12 receives the message 22, the phone 12 reads the header and recognizes it, as being followed by data that is encrypted.

The phone 12 triggers an execution of the application for cooperating with the card 14, so as to decrypt the encrypted data received from the server 18.

The phone 12 extracts data, as the encrypted data, included within a content of the received message.

The phone 12 sends to the card 14 a request 24 for decrypting data that is accompanied with encrypted data that is extracted from the received message.

The card microprocessor 142 launches an execution of the first application.

The card 14 stores the encrypted data.

Preferentially, the card 14 authenticates an authorised user. More exactly, the card 14 verifies whether the received user authentication data includes expected user authentication data that is stored within the card memory. If the received user authentication data does not match the expected one, then the card 14 displays a message for informing about a user authentication failure. Then, the card 14 forbids to continue an execution of the first application while aborting a process of being provided with corresponding clear data. Otherwise, i.e. when the received user authentication data matches the expected one, the card 14 displays a message for informing about a user authentication success.

The card 14 carries out a data decryption on the fly on the encrypted data by using the first key and the first algorithm both stored within the card memory.

Once the card 14 has obtained clear data, the card microprocessor 142 sends to the card display screen 1410 a message 26 for requesting to display data included within the message 26.

Then, the card display screen 1410 displays to the card user the obtained clear data.

The invention solution is secure since data exchanged between the phone 12 and the card 14 is encrypted. Moreover, the invention solution is user friendly since the process does not need to involve the card user except for a possible user authentication.

## Claims

1. A method (20) for decrypting data,
**characterized in that**, a first device (12) being coupled to at least one second device (14), the second device comprising at least one display screen (1410), the second device storing at least one first key, the method comprises the following steps:
- the first device sends to the second device at least one request (24) for decrypting data accompanied with encrypted data;
- the second device decrypts, thanks to the first key, the encrypted data and obtains clear data; and
- the second device displays, through at least one display screen (1410), the obtained clear data.

2. Method according to claim 1, wherein the second device decrypts the encrypted data only if the second device authenticates an authorized user.

3. Method according to claim 1 or 2, wherein the first device receives from a third device the encrypted data.

4. Method according to claim 3, wherein the third device encrypts data to be sent to the first device and adds predetermined data for indicating that data attached to the predetermined data includes the encrypted data.

5. Method according to any of claims 1 to 4, wherein the second device stores the encrypted data.

6. Method according to any of claims 1 to 5, wherein the encrypted data is comprised within at least one text message.

7. Method according to any of claims 1 to 6, wherein, the second device storing at least one second key, the method comprises the following steps:
- the first device sends to the second device at least one request for encrypting data accompanied with data to be encrypted;
- the second device encrypts, thanks to the second key, the data to be encrypted and obtains encrypted data;
- the second device sends to the first device the obtained encrypted data.

8. A second device (14) for decrypting data,
**characterized in that**, the second device being likely to be coupled to at least one first device (12), the second device comprising at least one display screen (1410), the second device comprising means (144) for storing at least one first key, the second device is adapted to:
- receive from the first device at least one request for decrypting data accompanied with encrypted data;
- decrypt, thanks to the first key, the encrypted data and obtains clear data; and
- display, through at least one display screen (1410), the obtained clear data.

9. Second device according to claim 7, wherein the second device includes a token.

10. A system (10) for decrypting data,
**characterized in that** the system comprises a first device (12) and at least one second device (14), the first device being coupled to at least one second device, the second device comprising at least one display screen (1410), the second device comprising means (144) for storing at least one first key,
**in that** the first device is adapted to send to the second device at least one request (24) for decrypting data accompanied with encrypted data; and
**in that** the second device is adapted to:
- decrypt, thanks to the first key, the encrypted data and obtains clear data; and
- display, through at least one display screen (1410), the obtained clear data.
